(19) Europäisches Patentamt
European Patent Office
Office européen des brevets

(11) Veröffentlichungsnummer: **0 378 862 B1**

(12) **EUROPÄISCHE PATENTSCHRIFT**

(45) Veröffentlichungstag der Patentschrift: **16.03.94**

(51) Int. Cl.[5]: **C08F 265/04**, C08F 279/02, C08L 51/04, C08L 57/00

(21) Anmeldenummer: **89124177.0**

(22) Anmeldetag: **30.12.89**

# (54) Oxetanylgruppen enthaltende thermoplastische Pfropfpolymerisate.

(30) Priorität: **14.01.89 DE 3901031**

(43) Veröffentlichungstag der Anmeldung:
**25.07.90 Patentblatt 90/30**

(45) Bekanntmachung des Hinweises auf die Patenterteilung:
**16.03.94 Patentblatt 94/11**

(84) Benannte Vertragsstaaten:
**DE ES FR GB IT NL**

(56) Entgegenhaltungen:

**CHEMICAL ABSTRACTS, Band 81, 1974, Seite 57, Zusammenfassung Nr. 153514t, Columbus, Ohio, US; & JP-A-73 44 676 (MATSUSHITA ELECTRIC WORKS) 26-12-1973**

**CHEMICAL ABSTRACTS, Band 70, 1969, Seite 10, Zusammenfassung Nr. 68852e, Columbus, Ohio, US; & JP-A-68 23 464 (POLYMER CHEMICAL INDUSTRY CO.) 09-10-1968**

(73) Patentinhaber: **BAYER AG**

**D-51368 Leverkusen(DE)**

(72) Erfinder: **Piejko Karl-Erwin, Dr.**
**Unterscheider Weg 7a**
**D-5060 Bergisch Gladbach 2(DE)**
Erfinder: **Lindner, Christian, Dr.**
**Im Wasserblech 11**
**D-5000 Köln 91(DE)**
Erfinder: **Fengler, Gerd, Dr.**
**Bethelstrasse 16**
**D-4150 Krefeld(DE)**
Erfinder: **Braese, Hans-Eberhard**
**Käthe-Kollwitz-Strasse 3**
**D-5000 Köln 71(DE)**
Erfinder: **Kirsch, Jürgen, Dr.**
**Hahnenweg 1**
**D-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 378 862 B1

## Beschreibung

Die Erfindung betrifft Oxetanylgruppen enthaltende thermoplastische Pfropfpolymerisate und aus ihnen hergestellte thermoplastische Formmassen.

Thermoplastische Formmassen, die harzartige Polymerisate z.B. Styrol-Acrylnitril-Copolymerisate oder Methylmethacrylat-Polymerisate und Pfropfpolymerisate (z.B. ABS, MBS oder ASA) enthalten, werden in großem Umfang zur Herstellung von Formkörpern wie Gehäusen von Elektrogeräten, Profilen und Rohren durch Spritzguß oder Extrusion verwendet. Dabei kann bereits bei der Herstellung der Formkörper durch die hohen Verarbeitungstemperaturen die Formmasse geschädigt werden. Dies ist z.B. an Verfärbungen erkennbar und auch durch Stabilisatoren nicht ganz zu verhindern. Auch bei manchen Anwendungen der Formteile, beispielsweise als Gehäuse von Haushaltsgeräten, können lokale Überhitzungen Verfärbungen verursachen. Es besteht deshalb ein Bedarf für Werkstoffe, die eine erhöhte Thermostabilität besitzen und Formkörper mit verbesserten mechanischen Eigenschaften, insbesondere auch nach längerem Gebrauch, herzustellen gestatten.

Gegenstand der Erfindung sind Pfropfcopolymerisate mit

A1 Pfropfhüllen aus Copolymerisaten von

A1.1 Styrolen, α-Methylstyrolen, Acrylnitril, $C_1$-$C_4$ Vinylcarbonsäuren, $C_1$-$C_8$-Alkylacrylaten und/oder -Alkylmethacrylaten, Maleinsäurederivaten, Vinyl(iden)chlorid und Mischungen daraus einerseits und

A1.2 Monomeren der Formel I

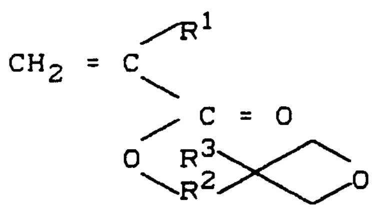

(I)

mit

$R^1$ = H, $CH_3$,

$R^2$ = $C_1$-$C_8$-Alkylen,

$R^3$ = $C_1$-$C_4$-Alkyl

andererseits und

A.2 Pfropfbasen aus teilchenförmigen Dien- und/oder Acrylatkautschuken mit Teilchendurchmesser ($d_{50}$) von 80 bis 800 nm, bevorzugt von 100 bis 600 nm.

Die erfindungsgemäßen Pfropfpolymerisate sind bevorzugt teilvernetzt und besitzen Gelgehalte > 35 Gew.-%, insbesondere von 60 bis 95 Gew.-%. Sie enthalten bevorzugt 10-95 Gew.-%, insbesondere 20 bis 90 Gew.-% Kautschuk ($A_2$).

(Zur Messung des Teilchendurchmessers siehe W. Scholtan und H. Lange, Kolloid-Zeitschrift und Zeitschrift für Polymere, 250 (1972), S. 787-796. Die Gelgehalte werden nach M. Hoffmann et al, Polymeranalytik I und II, Georg Thieme-Verlag, Stuttgart (1977) bestimmt.)

Bevorzugte Pfropfhüllen A1 werden aus

A1.1 99-55, bevorzugt 98-70, insbesondere 97-80 Gew.-% Styrol, α-Methylstyrol, p-Methylstyrol, Acrylnitril, Methyl-, n-Butyl-, Cyclohexylmethacrylat, n-Butylacrylat, Vinylacetat und

A1.2 45 bis 1, bevorzugt 30 bis 2, insbesondere 20-3 Gew.-% Monomeren der Formel I mit

$R_1$ = H, $CH_3$

$R_2$ = Methylen

$R_3$ = $C_1$-$C_2$-Alkyl

hergestellt.

Die zur Herstellung der Pfropfhüllen A1 verwendeten Monomere A1.1 und A1.2 sind bekannt.

Die teilchenförmige Pfropfbasis (Kautschukgrundlage) A2 ist vorzugsweise ein durch radikalische Emulsionspolymerisation hergestellter meist teilvernetzter Dien- oder Alkylacrylatkautschuk mit mittleren Teilchendurchmessern ($d_{50}$) von 80 bis 800 nm, bevorzugt 100 bis 600 nm.

Dienkautschuke sind z.B. Polybutadien, Polyisopren und Copolymerisate von Butadien mit bis zu 35 Gew.-% Comonomeren wie Styrol, Acrylnitril, Methylmethacrylat, $C_1$-$C_6$-Alkylacrylat. Acrylatkautschuke sind z.B. vernetzte teilchenförmige Emulsionspolymerisate von $C_1$-$C_6$-Alkylacrylaten, insbesondere $C_2$-$C_6$-Alkyl-

acrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetztenden Comonomer, z.B. Divinylbenzol, Glykol-bis-acrylate, Bisacrylamide, Phosphorsäuretriallylester, Allylester der (Meth)-acrylsäure, Triallyl(iso)cyanurat, wobei die Acrylatkautschuke bis zu 4 Gew.-% der vernetzenden Comonomere enthalten können.

Diese Kautschuke sind bekannt. Vorteilhaft geeignet sind auch die in der DE-OS 3 200 070 beschriebenen mehrphasigen Acrylat-Kautschuke, die aus einem stark vernetzten Kern aus Dienkautschuk und einer Hülle aus vernetztem Acrylatkautschuk bestehen (Kautschuk mit Kern-Mantel-Struktur). Die mehrphasigen Acrylatkautschuke enthalten insbesondere 0,5-10, vorzugsweise 2-4 Gew.-% Dienkautschuk (als Kern).

Die Kautschuke A2 besitzen Gelgehalte (als Maß für die Vernetzung) von größer 35 Gew.-%, vorzugsweise von 60 bis 95 Gew.-%.

Die erfindungsgemäßen Pfropfpolymerisate können nach bekannten Verfahren durch wäßrige Emulsionspolymerisation mit radikalbildenden Initiatoren bei Temperaturen von 50 bis 90 °C hergestellt werden. Geeignete Initiatoren sind beispielsweise Persulfat, Perphosphat, Hydroperoxide oder Azoverbindungen. Bevorzugt sind anorganische, wasserlösliche Initiatoren. Bei der Pfropfpolymerisation werden vorteilhaft anionische Emulgatoren vom Typ der Carbonsäuresalze, z.B. Salze der Ölsäure, Stearinsäure, Harzsäuren, Abietinsäure sowie deren disproportionierte Derivate mitverwendet.

Das angewendete Polymerisationsverfahren muß sicherstellen, daß die Oxethanylgruppen erhalten bleiben (beispielsweise muß man bei der Emulsionspolymerisation stark saures (pH $<1$) und stark alkalisches (pH $>12$) Milieu und höhere Temperaturen vermeiden). Oxethanylgruppen enthaltende Copolymerisate, die in schwach alkalischem Milieu in wäßriger Dispersion erzeugt worden sind, sind besonders geeignet.

Ein weiterer Gegenstand der Erfindung sind thermoplastische Formmassen auf der Basis der erfindungsgemäßen Oxethanylgruppen enthaltenden Pfropfpolymerisate. Die erfindungsgemäßen Pfropfpolymerisate können für sich alleine als Formmassen verwendet werden, bevorzugt benutzt man aber Gemische aus

1) einem Oxethanylgruppen enthaltenden erfindungsgemäßen Pfropfpolymerisat und
2) einem thermoplastischen Polymerisat oder Pfropfpolymerisat.

Die Komponente 2) kann ein Polymerisat aus einem oder aus mehreren Monomeren A1) sein. Bevorzugt sind Polystyrol, Polymethylmethacrylat, Polyvinylchlorid, Styrol-Acrylnitril-Copolymerisate; $\alpha$-Methylstyrol-Acrylnitril-Copolymerisate und $\alpha$-Methylstyrol-Acrylnitril-Methylmethacrylat-Copolymerisate. Die Komponente 2) kann auch ein Pfropfpolymerisat von Vinylmonomeren auf einen Kautschuk sein. Besonders als Pfropfgrundlage geeignete Kautschuke sind Dienkautschuke, Alkylacrylatkautschuke, Olefinkautschuke und Siliconkautschuke. Die in ihrer Anwesenheit polymerisierten Pfropfmonomeren sind wieder bevorzugt die Vinylmonomeren A1). Bevorzugte Pfropfpolymerisate sind wenigstens teilweise vernetzt und besitzen eine teilchenförmige Struktur mit mittleren Teilchendurchmessern von 100 bis 3000 $\mu$m, bevorzugt 100 bis 1000 $\mu$m. Als Komponente 2) sind auch thermoplastisch verarbeitbare Kautschuke geeignet, z.B. Naturkautschuk, Olefinkautschuke wie EPDM, Ethylenvinylacetat-Copolymere, Acrylatkautschuk, Dien/Styrol-Blockcopolymerisate sowie deren Hydrierungsprodukte.

Besonders bevorzugte Formmassen bestehen aus einem

1) oxetanhaltigen Pfropfpolymerisat und
2) einem thermoplastisch, harzartigen Polymerisat.

Ganz besonders bevorzugte Formmassen im Sinne der Erfindung bestehen aus einem erfindungsgemäßen Propfpolymerisat mit Oxetanylgruppen, Polyvinylchlorid, einem ABS- oder MBS-Pfropfpolymerisat und gegebenenfalls einem thermoplastischen Styrol- oder $\alpha$-Methylstyrol-Copolymerisat.

Die Massen können die üblichen Zusatzstoffe, wie Gleit-und Entformungsmittel, Nucleierungsmittel, Stabilisatoren, Füll-, Verstärkerstoffe, Flammschutzmittel, Farbstoffe sowie Thermostabilisatoren, Antioxidantien und/oder Lichtschutzmittel enthalten. Diese Additive werden in den üblichen Mengen, im allgemeinen bis zu 30 Gew.-%, gelegentlich allerdings auch bis zu 60 Gew.-% (insbesondere bei Füllstoffen), verwendet. Die Formmassen können durch Vermischen der Komponenten in üblicher Weise erhalten werden. Besonders geeignete Füllstoffe sind Glasfasern, da solche Formmassen trotz der Glasfaseranwesenheit vorteilhafte Oberflächeneigenschaften nach Formgebung aufweisen.

Gegenstand einer besonders bevorzugten Ausführungsform sind Formmassen aus

A) 2 bis 70 Gew.-Teilen, bevorzugt 5 bis 60 Gew.-Teilen, eines Pfropfpolymerisats von
  A1) 10 bis 95 Gew.-% eines auf dem Kautschuk polymerisierten Monomerengemischs von
    A11) 99 bis 50 Gew.-%, bevorzugt 98 bis 70 Gew.-% Styrol, $\alpha$-Methylstyrol, Acrylnitril, $C_1$-$C_4$-Vinylcarbonsäuren, $C_1$-$C_8$-Alkylacrylaten und/oder Alkylmethacrylaten, Maleinsäurederivaten, Vinylfluorid, Vinylidenchlorid oder Mischungen daraus
    A12) 45 bis 1 Gew.-%, bevorzugt 30 bis 2 Gew.-%, eines Monomeren der Formel I auf

A2) 5 bis 90 Gew.-% eines teilchenförmigen Dien und/oder Acrylatkautschuks mit mittleren Teilchendurchmesser $d_{50}$ von 80 bis 800 nm, bevorzugt 100 bis 600 nm, mit einem Gelgehalt größer 35 % und

B) 30 bis 98, bevorzugt 40 bis 95 Gew.-Teilen, eines thermoplastischen Copolymerisats von

B1) Styrol, α-Methylstyrol, Acrylnitril, Methacrylnitril, Carbonsäure, $C_1$-$C_4$-Vinylestern, Acrylsäureestern, Methacrylsäureestern, Maleinsäurederivaten, Vinylchlorid, Vinylidenchlorid und gegebenenfalls

B2) Monomeren der Formel I

C) 10 bis 100 Gew.-Teile (pro 100 Gew.-Teile A + B) Glasfasern.

Die Formmassen sind geeignet zur Herstellung von Formkörpern oder Formteilen jeder Art. Sie besitzen im allgemeinen größere Stabilität gegenüber Alterung durch Umwelteinflüsse, Chemikalien, Temperaturbelastung und Schmelzflußscherung während der thermoplastischen Verarbeitung und Formgebung. Die verbesserte Stabilität zeigt sich auch in verbesserten Eigenschaften wie Farbe, kürzerem Verarbeitungszyklus, Langzeitstabilität bei Gebrauch, geringem Gehalt an Verunreinigungen und Nebenprodukten, besserem Glanz, besseren mechanischen Eigenschaften.

Beispiele

Die erfindungsgemäßen Oxetanylgruppen enthaltenden Polymerisate werden durch Pfropfcopolymerisation des Monomers der Formel Ia erhalten.

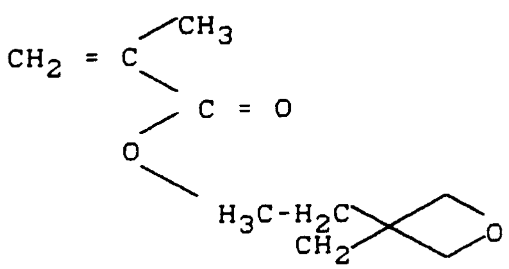

(Ia)

Die Mengenangaben in den Beispielen sind, wenn nicht anders angegeben, in Gew.-%.

1. Bestandteile der erfindungsgemäßen und Vergleichsformmassen

1.1 Pfropfcopolymerisate A

A-I:

In einem Reaktor werden vorgelegt: 3160 g Wasser und 1640 g eines Polybutadienkautschuklatex mit einem Feststoffgehalt von 48,8 Gew.-% und einem mittleren Teilchendurchmesser ($d_{50}$) von 390 nm. Es wird 15 min. mit Stickstoff gespült. Nach Aufheizen auf 65 °C wird unter leichtem Stickstoffstrom eine Lösung aus 12 g Kaliumperoxodisulfat in 760 g Wasser zugegeben. Danach werden folgende Lösungen gleichmäßig innerhalb von 7 Stunden in den Reaktor eingespeist:

Lösung 1: 1120 g Styrol
634 g Acrylnitril
112 g Ia

Lösung 2: 92 g Natriumsalz der disproportionierten Abietinsäure
69 g 1n Natronlauge
506 g Wasser

Man läßt sechs Stunden bei 65 °C auspolymerisieren, fügt 1 Gew.-% (bezogen auf Feststoff) eines phenolischen Stabilisators zu und koaguliert den Latex (pH 10) mit einer wäßrigen Magnesiumsulfatlösung. Das Koagulat wird mit Wasser gewaschen und bei 60 °C getrocknet.

A-II:

In einem Reaktor werden vorgelegt: 508 g Wasser, 20 g 1n Natronlauge und 2317 g eines Acrylatkautschuklatex mit Kern/Mantel-Struktur nach der DE-A 3 200 070 mit einem Feststoffgehalt von 38,2 Gew.-% und einem mittleren Teilchendurchmesser ($d_{50}$) von 480 nm. Es wird 15 min mit Stickstoff gespült. Nach Aufheizen auf 70 °C wird unter leichtem Stickstoffstrom eine Lösung aus 3 g Kaliumperoxodisulfat in 100 g Wasser zugegeben. Danach werden folgende Lösungen gleichmäßig innerhalb von 5 Stunden bei 70 °C in den Reaktor eingespeist:

Lösung 1: 399 g Styrol
155 g Acrylnitril

36,5 g Ia

Lösung 2: 10 g Natriumsalz von $C_{14}$-$C_{18}$-Alkylsulfonsäuren

750 g Wasser

9 g 1n Natronlauge

Man läßt 6 Stunden bei 70 °C auspolymerisieren, fügt 1 Gew.-% (bezogen auf Feststoff) eines phenolischen Stabilisators zu und koaguliert den Latex mit einer wäßrigen Magnesiumsulfatlösung. Das Polymerisat wird mit Wasser gewaschen und bei 60 °C getrocknet.

A-III

Man verfährt wie in Beispiel A-II, wobei als Lösung 1 folgende Lösung zudosiert wird:

Lösung 1: 412 g Styrol

160 g Acrylnitril

18,2 g Ia

1.2 Vergleichspfropfcopolymerisate

V-I:

Man verfährt wie in Beispiel A-I. Als Lösung 1 wird folgende Lösung zudosiert:

Lösung 1: 1232 g Styrol

634 g Acrylnitril

V-II:

Man verfährt wie in Beispiel A-II. Als Lösung 1 wird folgende Lösung zudosiert:

Lösung 1: 425 g Styrol

165 g Acrylnitril

1.3 Weitere Komponenten

1.3.1 Polyvinylchlorid mit einem K-Wert von 70.

1.3.2 Copolymerisat hergestellt durch wäßrige Emulsionscopolymerisation einer Monomermischung aus α-Methylstyrol/-Acrylnitril = 72/28 mit einer Grenzviskosität [η] = 1,3 (in Dimethylformamid bei 25 °C gemessen).

2. Herstellung und Prüfung der Formmassen

Zur Herstellung der Formmassen werden die in der Tab. 1 aufgeführten Komponenten in den dort angegebenen Mengen auf einem Mischwalzwerk bei 180 °C unter Zusatz von 1 Gew.-% Octylzinnmercaptid und 0,2 Gew.-% Esterwachs homogen vermischt und zu ca. 1 mm starken Folien ausgewalzt. Die Prüfung der Formmassen erfolgt durch Lagerung im Mathisofen bei 190 °C bzw. 200 °C und anschließende visuelle Beurteilung. Prüfzeiten und Ergebnisse der Prüfung sind in Tabelle 2 zusammengestellt.

Die Ergebnisse aus Tabelle 2 zeigen, daß die erfindungsgemäßen Formmassen nach Wärmealterung unter den angegebenen Bedingungen nur wenig verfärbt sind, während die Vergleichsformmassen stark verfärbt sind, was auf eine partielle Zerstörung bzw. Schädigung der Formmassen schließen läßt. Weiterhin zeigen die Ergebnisse in Tabelle 2, daß die erfindungsgemäßen Formmassen erheblich länger einer Wärmealterung unterzogen werden können, bis sie entsprechende Verfärbung aufweisen. Diese Ergebnisse belegen die überlegene Alterungsstabilität der erfindungsgemäßen Formmassen.

**Tabelle 1** Zusammensetzung erfindungsgemäßer und Vergleichsformmassen (-V) (in Gew.-%)

| Beispiel Nr. | A-I | A-II | A-III | V-I | V-II | 1.3.1 (PVC) | 1.3.2 (AMS-Harz) |
|---|---|---|---|---|---|---|---|
| 1 | 50 | - | - | - | - | 50 | - |
| 1-V | - | - | - | 50 | - | 50 | - |
| 2 | - | 50 | - | - | - | 50 | - |
| 2-V | - | - | - | - | 50 | 50 | - |
| 3 | - | - | 20 | - | - | 50 | 30 |
| 3-V | - | - | - | - | 20 | 50 | 30 |

<u>Tabelle 2</u> Prüfung erfindungsgemäßer und Vergleichsformmassen (-V) durch Lagerung im Mathisofen (Zusammensetzung siehe Tabelle 1)

| Beispiel Nr. | Lagerzeit/ Temperatur [min °C] | visuelle Beurteilung | Lagerzeit bis zum Erreichen der gleichen Verfärbungsintensität wie Vergleichsproben [min] |
|---|---|---|---|
| 1 | 75/190 | gelb | >105 |
| 1-V | 75/190 | braun | |
| 2 | 45/190 | gelblich | 75 |
| 2-V | 45/190 | braun | |
| 3 | 20/200 | gelb | 30 |
| 3-V | 20/200 | dunkelbraun | |

Beispiele für glasfaserhaltige Formmassen

1) Polymerisate

Pfropfpolymerisat A:

Pfropfpolymerisat aus 50 Gew.-% Polybutadien mit einem mittleren Teilchendurchmesser ($d_{50}$-Wert) von 380 nm (Pfropfgrundlage) und 50 Gew.-% einer pfropfpolymerisierten Mischung aus Styrol und Acrylnitril (Gewichtsverhältnis 72/28) als Pfropfauflage (hergestellt durch Emulsionspolymerisation).

Copolymerisat B:

Die Molmassen der Polymerisate werden charakterisiert durch den L-Wert:

L-Wert = $(\eta_{rel}-1)/0{,}005$ = relative Lösungsviskosität, gemessen in Dimethylformamid bei 25 °C und einer Konzentration von 0,005 g/cm$^3$.

B1:

Copolymerisat aus Styrol und Acrylnitril im Gewichtsverhältnis 72:28, hergestellt durch wäßrige Emulsionspolymerisation. Das Polymerisat besitzt einen L-Wert von 81.

B2:

Oxetanylgruppen enthaltendes Terpolymerisat, hergestellt durch wäßrige Emulsionspolymerisation einer Monomermischung aus Styrol, Acrylnitril und der Verbindung (Ia)

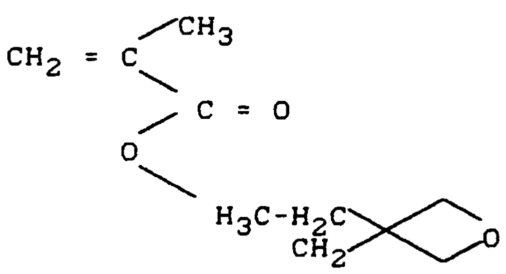

(Ia)

im Gewichtsverhältnis 67:28:5, mit dem Natriumsalz der disproportionierten Abietinsäure als Emulgator bei pH 10. Das Polymerisat wurde durch Koagulation des Polymerisatlatex mit einer wäßrigen Magnesiumsulfat-Natriumacetat-Essigsäurelösung (pH 4,2) und übliche Aufarbeitung isoliert. Das Polymerisat besitzt einen L-Wert von 94.

B3:

Oxetanylgruppen enthaltendes Terpolymerisat, hergestellt durch wäßrige Emulsionspolymerisation einer Monomermischung aus Styrol, Acrylnitril und der Verbindung (Ia) im Gewichtsverhältnis 62:28:10, mit dem Natriumsalz der disproportionierten Abietinsäure als Emulgator bei pH 10. Das Polymerisat wurde durch Koagulation des Polymerisatlatex mit einer wäßrigen Magnesiumsulfat-Natriumacetat-Essigsäurelösung (pH 4,29) und übliche Aufarbeitung isoliert. Das Polymerisat besitzt einen L-Wert von 97.

Glasfasern C:

Glasfasern GC CS 7911 der Firma Bayer AG.

2. Herstellung und Prüfung der Formmassen

Durch Mischung der Bestandteile wie in Tabelle 1 angegeben in einem 1.3 l Innenkneter bei ca. 200 °C werden thermoplastische Formmassen hergestellt. Nach Spritzgießverarbeitung zu Probekörpern wurden Schlagzähigkeit und Kerbschlagzähigkeit bei Zimmertemperatur und bei -40 °C gemäß ISO 179 (Einheit: $kJ/m^2$) ermittelt. Alle Formmassen enthalten neben den in Tabelle 1 angegebenen Bestandteilen als Additive 0,1 Gew.-Teile eines Silikonöls und 2 Gew.-Teile Pentaerythrittetrastearat. Die Oberflächenqualität wurde an ebenen Platten der Maße 60 x 40 x 2 mm beurteilt.

Die Tabelle 1 zeigt, daß oxetangruppenhaltige Polymerisate Formmassen ergeben, die verbesserte Schlag- und Kerbschlagzähigkeiten aufweisen.

**Tabelle 1: Zusammensetzung und Eigenschaften der Formmassen**

| Beispiel | Komponenten | | | | | Kerbschlagzähigkeit [kJ/$m^2$] | | Schlagzähigkeit [kJ/$m^2$] | Oberflächenqualität |
|---|---|---|---|---|---|---|---|---|---|
| | | B | | | C | | | | |
| | Gew.-Teile | B1 Gew.-Teile | B2 | B3 | Gew.-Teile | RT | -40° C | -40° C | |
| 1 | 40 | 60 | -- | -- | 20 | 8,5 | 7,2 | 16,2 | sehr rauh |
| 2 | 40 | -- | 60 | -- | 20 | 10,1 | 8,4 | 19,5 | rauh |
| 3 | 40 | -- | -- | 60 | 20 | 10,3 | 8,2 | 21,8 | fast glatt |

## Patentansprüche

1. Pfropfcopolymerisate mit
   A.1 Pfropfhüllen aus Copolymerisaten von

A.1.1 Styrolen, α-Methylstyrolen, Acrylnitril, $C_1$-$C_4$-Vinylcarbonsäuren, $C_1$-$C_8$-Alkylacrylaten und/oder -Alkylmethacrylaten, Maleinsäurederivaten, Vinyl(iden)chlorid und Mischungen daraus einerseits und

A.1.2 Monomeren der Formel I

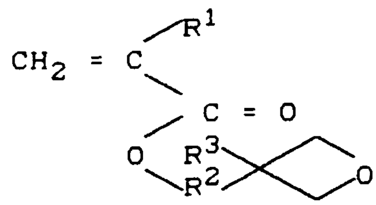

(I)

worin

$R^1$ = H, $CH_3$,

$R^2$ = $C_1$-$C_8$-Alkylen,

$R^3$ = $C_1$-$C_4$-Alkyl

andererseits und

A.2 Pfropfbasen aus teilchenförmigen Dien-und/oder Acrylatkautschuken mit Teilchendurchmessern ($d_{50}$) von 80 bis 800 nm.

**2.** Thermoplastische Formmassen, enthaltend Pfropfpolymerisate gemäß Anspruch 1 und gegebenenfalls weitere thermoplastische Polymerisate oder Pfropfpolymerisate.

**Claims**

**1.** Graft copolymers having

A.1 graft shells of copolymers of

A.1.1 styrenes, α-methyl styrenes, acrylonitrile, $C_{1-4}$ vinyl carboxylic acids, $C_{1-8}$ alkyl acrylates and/or alkyl methacrylates, maleic acid derivatives, vinyl(idene) chloride and mixtures thereof on the one hand and

A.1.2 Monomers corresponding to formula I

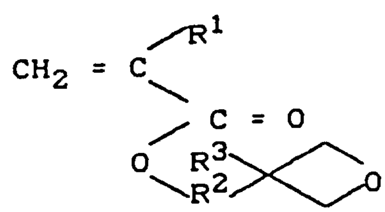

(I)

in which

$R^1$ = H, $CH_3$,

$R^2$ = $C_{1-8}$ alkylene,

$R^3$ = $C_{1-4}$ alkyl

on the other hand and

A.2 graft bases of particulate diene and/or acrylate rubbers having particle diameters ($d_{50}$) of from 80 to 800 nm.

**2.** Thermoplastic molding compounds containing the graft polymers claimed in claim 1 and, optionally, other thermoplastic polymers or graft polymers.

## Revendications

1. Copolymères greffés comprenant
   A.1 des enveloppes de greffage formées de copolymères
   A.1.1 de styrènes, d'α-méthylstyrènes, d'acrylonitrile, d'acides vinyl-carboxyliques en $C_1$ à $C_4$, d'acrylates et/ou de méthacrylates d'alkyle en $C_1$ à $C_8$, de dérivés d'acide maléique, de chlorure de vinyle (vinylidène) et de mélanges de ces monomères d'une part et
   A.1.2 de monomères de formule I

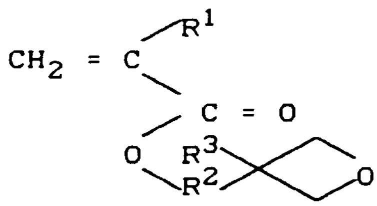

(I)

dans laquelle
$R^1$ représente H ou $CH_3$,
$R^2$ représente un groupe alkylène en $C_1$ à $C_8$,
$R^3$ représente un groupe alkyle en $C_1$ à $C_4$,
d'autre part, et
A.2 des substrats de greffage formés de caoutchoucs diéniques et/ou de caoutchoucs d'acrylate en particules ayant des diamètres ($d_{50}$) de 80 à 800 nm.

2. Compositions à mouler thermoplastiques, contenant des polymères greffés suivant la revendication 1 et, le cas échéant, d'autres polymères thermoplastiques ou polymères greffés.